# EUROPEAN PATENT APPLICATION

(11) **EP 3 244 198 A1**
(43) Date of publication of application: **15.11.2017**
(21) Application number: 16169498.9
(22) Date of filing: 13.05.2016
(51) Int. Cl.: G01N 21/956, G01B 11/25, G01N 21/88

(54) **METHOD AND APPARATUS FOR INSPECTING A SOLDER PASTE DEPOSIT WITH A DIGITAL MIRROR DEVICE**

(71) Applicant: ASM Assembly Systems GmbH & Co. KG, 81379 München (DE)
(72) Inventor: Greer, Mathew, Glenrothes, KY75DZ (GB)
(74) Representative: Dilg, Haeusler, Schindelmann Patentanwaltsgesellschaft mbH

(57) **Abstract**

It is described a method for inspecting a solder paste deposit (110) being printed on a component carrier (111). The method comprises i) providing a first structured illumination (135) having a first orientation at the solder paste deposit (110) by using a digital mirror device, DMD, (130) which comprises a plurality of tiltable mirrors, ii) obtaining a first image of the solder paste deposit (110) being illuminated with the first structured illumination (135), iii) controlling the angular position of at least some of the mirrors of the plurality of mirrors of the DMD (130) in order to change the first orientation into a second orientation, iv) providing a second structured illumination (135) having the second orientation at the solder paste deposit (110) by using the DMD (130), v) obtaining a second image of the solder paste deposit (110) being illuminated with the second structured illumination (135), and vi) determining spatial information about the solder paste deposit (110) based on the first image and the second image.

## Description

### Field of invention

The present invention relates to the field of manufacturing electronic assemblies. The present invention relates in particular to a method for inspecting a solder paste deposit being printed on a component carrier for manufacturing an electronic assembly, i.e. before placing electronic components onto the printed component carrier. Furthermore, the present invention relates to a method and an apparatus for inspecting a solder paste deposit using structured illumination.

### Art Background

Electronic assemblies and circuits comprising electronic components are typically built up at or on component carriers such as printed circuit boards (PCBs). A manufacturing process of a component carrier typically includes providing a solder paste deposit onto predetermined portions or contact pads of electrically conductive layer structures. This step of providing solder paste deposits by printing solder paste onto a surface of the component carrier is in general done before electronic components are placed onto the component carrier. In many cases, the solder paste deposits which have been printed onto contact pads are necessary in order to electrically contact an electronic component to the component carrier. Thus, subsequent to the step of printing solder paste deposits, electronic components are placed onto the solder paste deposit in order to manufacture an electronic assembly.

In this respect it is a common problem that, in case the solder paste deposits are not of high quality, a final electronic assembly may show a large variety of technical failures, e.g. wrong and/or malfunctioning electronic contacts. Therefore, in many cases the qualities of at least some solder paste deposits are measured before placing electronic components onto the component carrier. Such a procedure is called "SPI (solder paste inspection)".

In SPI, a structured illumination may be provided at a surface of the solder paste deposit. As the surface of the solder paste deposit is not exactly flat, a light pattern of the structured illumination will be influenced by the three-dimensional shape of the solder paste deposit. By using mathematical methods, a spatial information about the solder paste deposit can be obtained based on a spatial distortion of structured illumination. Currently used systems apply e.g. so called Moire fringe technology with fixed lenses. However, these systems are restricted to the physical dimensions of the lenses and are thus not at all flexible in their measurement performance.

During the manufacturing process of an electronic assembly and depending on the layout of a PCB, it may often occur that electronic components have to be placed in a rotated manner with respect to a predominant direction of the component carrier. Solder paste deposits must then also "be rotated" and conventional fixed lenses cannot deal with such spontaneous changes in the production process. Rather, the lenses will have to be adapted individually to each product type. This requires additional time and efforts.

Furthermore, it may often occur during the manufacturing process of an electronic assembly that a component carrier and the absolute height of its associated solder paste deposits are affected by warpage. Warpage may only be detected with structured illumination. However, while the size of solder paste deposits may be in a range of micrometers, warpage of a component carrier typically occurs in a range of millimeters. As a result, different light patterns have to be provided with different structured illuminations.

Conventional fixed lenses cannot deal with such different requirements in the SPI process. Rather, the lenses will have to be adapted individually to detect either solder paste deposit volumes or warpage. This also requires additional time and efforts.

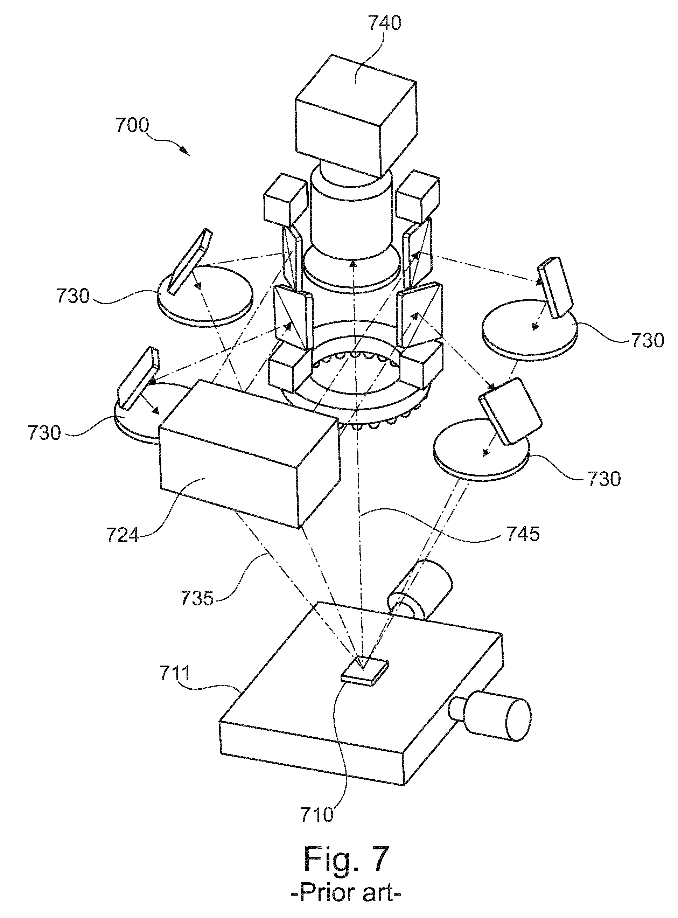

For example, Figure 7 illustrates a prior art solder paste inspection apparatus 700, in particular a multi-directional projection type Moire interferometer (see patent application EP 1 990 604 A1). A prior art light source 724 emits a light beam to a plurality of fixed prior art lenses 730. Each prior art lens 730 provides a prior art illumination light 735 at the surface of a prior art solder paste deposit 710 being printed on a prior art component carrier 711. Prior art measurement light 745 is scattered at the prior art solder paste deposit 710 and is collected with a prior art camera 740. The described prior art system is restricted to the physical dimensions of the fixed lenses and is thus not at all flexible in performing measurements.

There may be a need to provide an efficient and flexible method for inspecting a solder paste deposit with structured illumination, which method saves time and efforts during the manufacturing process of an electronic assembly.

### Summary of the Invention

This need may be met by a method for inspecting a solder paste deposit, an apparatus for inspecting a solder paste deposit, and a method for manufacturing an electronic assembly according to the independent claims. Advantageous embodiments of the present invention are described by the dependent claims.

According to a first aspect of the invention there is provided a method for inspecting a solder paste deposit being printed on a component carrier, the method comprising i) providing a first structured illumination having a first orientation at the solder paste deposit by using a digital mirror device, DMD, which comprises a plurality of tiltable mirrors, ii) obtaining a first image of the solder paste deposit being illuminated with the first structured illumination, iii) controlling the angular position of at least some of the mirrors of the plurality of mirrors of the DMD in order to change the first orientation into a second orientation, iv) providing a second structured illumination having the second orientation at the solder paste deposit by using the DMD, v) obtaining a second image of the solder paste deposit being illuminated by the second structured illumination, and vi) determining spatial information about the solder paste deposit based on the first image and the second image.

The described method is based on the idea that a digital mirror device (DMD) may be applied for inspecting a solder paste deposit, in particular for determining spatial information about the solder paste deposit. Hereby, a DMD projector may be applied for providing a first structured illumination at the solder paste deposit such that a first image of the solder paste deposit being illuminated with the first structured illumination will be obtained (e.g. by a camera). The DMD may comprise a plurality of tiltable mirrors and at least some of the plurality of mirrors of the DMD are controlled in order to change the angular position of these mirrors. In this manner a first orientation of mirrors may be changed to a second orientation of mirrors. The structured illumination may correspondingly be changed from a first structured illumination to a second structured illumination in a very fast and flexible manner, because the DMD provides the first structured illumination and the second structured illumination based on the first orientation and the second orientation, respectively. As a result, a second image of the solder paste deposit being illuminated with the second structured illumination will be obtained. Based on the two different images, spatial information about the solder paste deposit will be determined. This may provide the advantage that spatial information about the solder paste deposit may be determined in an efficient and flexible manner. There may be no requirement to physically change any lenses, when two different images (under two different structured illuminations) of the solder paste deposit have to be taken. Hence, a plurality of different spatial information may be obtained in short time and without additional efforts. Furthermore, there may be no requirement to physically change any lenses when measurement ranges respectively the periodicities of structures (e.g. lines) of the structured illumination are to be adapted to a specific measurement. For example, rotated solder paste deposits and/or warpage may be measured without additional time and effort requirements.

The described method may further provide the following advantages: fast image collection, many options regarding accuracy and speed, efficient measurement capability, and a high flexibility in rotation capability. Furthermore, DMDs are known in the art to be highly reliable over long time periods. Therefore, the described method can be realized with comparatively small effort for specific hardware.

According to a further aspect of the invention there is provided an apparatus for inspecting a solder paste deposit being printed on a component carrier. The apparatus comprises a digital light processing (DLP) projector comprising a digital mirror device (DMD) which comprises a plurality of tiltable mirrors. The DLP projector is configured for i) providing a first structured illumination having a first orientation at the solder paste deposit, and for ii) providing a second structured illumination having a second orientation at the solder paste deposit. Furthermore, the DLP projector comprises a control unit for controlling at least some of the mirrors of the plurality of mirrors of the DMD in order to change the first orientation into the second orientation. The apparatus comprises further a camera for obtaining a first image of the solder paste deposit being illuminated by the first structured illumination, and for obtaining a second image of the solder paste deposit being illuminated by the second structured illumination. Furthermore, the apparatus comprises a determination unit for determining spatial information about the solder paste deposit based on the first image and the second image.

The described apparatus may for example perform the method described above. The apparatus is based on the same idea and may provide the same advantages as the method of inspecting.

According to a further aspect of the invention, a method for manufacturing an electronic assembly which comprises a high-quality solder paste deposit is provided. The method comprises i) generating a solder paste deposit by printing a solder paste onto a component carrier, ii) inspecting the solder paste deposits by carrying out the method for inspecting described above, and iii) providing the inspected component carrier to an assembly process, wherein electronic components are placed onto the solder paste deposits only in case that the step of inspecting yields that the solder paste deposit is of high quality.

The described method of manufacturing includes the method of inspecting described above. The method of manufacturing is based on the same idea and may provide the same advantages as the method of inspecting.

In the context of the present document the term "solder paste" may particularly denote a material used in the manufacturing of electronic assemblies to connect electronic components to contact pads of electrically conducting layers formed on a component carrier. Typically, the solder paste initially adheres placed electronic components in position by being sticky. Later in the manufacturing process of electronic assemblies the solder paste may be heated (along with the rest of the board) such that the solder paste melts and forms a mechanical connection as well as an electrical connection between the component carrier and an electronic component.

The solder paste may be printed on the component carrier by screen printing (e.g. using a solder mask). After SPI the electronic components may be put in place by an assembly machine.

Solder paste may be powder metal solder suspended in a thick medium called flux. The solder compositions may for example be a Sn-Pb alloy (tin/lead), SAC alloy (tin/silver/copper), or a tin-antimony (Sn/Sb) alloy. When the solder paste has been printed on a surface of the component carrier, it may be termed solder paste deposit.

In the context of the present document the term "component carrier" may particularly denote any support structure which is capable of accommodating one or more electronic components thereon and/or therein for providing both mechanical support and electrical connectivity. Further aspects of the term "component carrier" will be described below.

In the context of the present document the term "structured illumination" may particularly denote a specific light pattern provided onto a material surface in order to obtain spatial information about the material. For example, the light pattern may comprise parallel lines. The light pattern may as well comprise a plurality of dots. Furthermore, the light pattern may comprise any orientation of geometrical shapes. In the case that the surface of the material is not absolutely flat, the light pattern may be influenced by height differences of the material. In other words, a raised height of the surface of the material may distort or shift e.g. the lines of the light pattern. Hereby, the angle of projection of the illumination light may be known and a distance between e.g. the lines of the light pattern may be known. As a result, the height of the surface of the material may be calculated from a measured distortion. Structured illumination may comprise a Moire fringe pattern. High resolution methods rely on Moire fringe interferometry.

In the context of the present document the term "digital mirror device" may particularly denote a chip arranged in a digital light processing projector. A DMD chip may comprise on its surface several hundred thousand or even millions of microscopic mirrors arranged in a rectangular array. Each mirror of the array may correspond a pixel in an image to be displayed. The mirrors may be individually rotated (e.g. around 10°), to an on-state or an off-state. In the on-state, light from a light source may be projected into an on-state projector and thereby provide structured illumination. In the off-state, the light from the light source may be directed to an off-state projector (e.g. a heatsink).

In the context of the present document the term "image" may particularly denote a graphical representation of an object. An image may for example be obtained by using a camera. Light from an environment may be collected in order to produce a pixel-based image. An image may also be obtained by using a camera to collect scattered and/or reflected light. For example, light from structured illumination may be scattered and/or reflected at a solder paste deposit. The scattered and/or reflected light may be collected by the camera in order to produce an image, in particular a pixel-based image. Hereby, the term "camera" may particularly denote an optical instrument for recording an image. The camera may comprise e.g. a charge-coupled device (CCD).

In the context of the present application, the term "spatial information" may particularly denote information which may be applied to evaluate the quality of a solder paste deposit. For example, determined spatial information may be compared with reference spatial information about the solder paste deposit. The more similar the determined spatial information and the reference spatial information may be, the higher the quality of the solder paste deposit may be. Spatial information may comprise a plurality of different geometrical information about the solder paste deposit. Spatial information may in particular comprise a three-dimensional structure of the solder paste deposit and is described below.

In the following, embodiments of the described method and of the described apparatus will be explained.

According to an embodiment of the invention determining spatial information comprises calculating a three-dimensional image of the solder paste deposit. This may provide the advantage that the quality of a solder paste deposit may be evaluated based on clear and demonstrative data.

A three-dimensional image may comprise spatial information in all of the three spatial directions length, width, and depth. In a coordinate system, a three-dimensional image may comprise spatial information in all three axes x, y, and z. In this manner, a material such as a solder paste deposit may be inspected in all three-dimensions automatically by a software and/or manually by a user. The result may be shown in a demonstrative and clear manner on a computer screen.

According to a further embodiment calculating the three-dimensional structure further comprises deriving a volume of the solder paste deposit. This may provide the advantage that a large variety of quality-related spatial information about the solder paste deposit may be determined.

The volume may be a quantity of a three-dimensional space enclosed by a closed boundary. For example, the volume may be the space that an object (e.g. solder paste deposit) occupies or contains. The volume of the solder paste deposit may be calculated based on the first image and the second image. The images, which have been obtained under different structured illuminations, contain information about height distributions of the solder paste deposit. As length and width of the solder paste deposit are already known, the volume may be calculated when taking into account said height distribution information.

According to a further embodiment, providing the first structured illumination and the second structured illumination comprises controlling the DMD to project at least two lines on the solder paste deposit. This may provide the advantage that in a very fast and flexible manner the structured illumination may be adapted to required measurement condition.

The DMD may project a plurality of lines on the solder paste deposit. At least two projected lines of the plurality of lines may be in parallel to each other. All of the projected lines may be parallel to each other as well. The distance between all lines may be similar in the latter case. The at least two projected lines may form a specific pattern, e.g. a Moire pattern. A Moire pattern may be a secondary and visually evident superimposed pattern. Such a Moire pattern may be created, for example, when two identical (transparent or non-transparent) patterns on a flat or curved surface may be overlaid while displaced or rotated a small amount from one another. The DMD may also project a plurality of dots or any geometrical shape on the solder paste deposit. Hence, dependent on the required measurement conditions, the DMD may adapt the structured illumination in a suitable manner.

The at least two projected lines may be two spatially separated lines. The at least two projected lines may also correspond to at least two maxima of a wave, respectively. In particular, the wave may be a sine-wave. The illumination light may project a wave pattern at the solder paste deposit, wherein the positive maxima of the amplitude of the wave may be viewable as the projected lines at the solder paste deposits.

According to a further embodiment, the DMD is controlled such that a first distance between the lines is given for providing the first structured illumination and/or the second structured illumination. This may also provide the advantage that in a very fast and flexible manner the structured illumination may be adapted to required measurement condition.

According to a further embodiment the DMD is controlled such that a second distance being different from the first distance between the lines is given for providing a third structured illumination. The method further comprising i) providing the third structured illumination, and ii) obtaining a third image of the solder paste deposit being illuminated with the third structured illumination. This may provide the advantage that with the described method additional spatial information about the solder paste deposit may be obtained in a fast and easy manner.

In order to determine additional spatial information, an additional third structured illumination may be necessary. For example, the first distance may be in the micrometer range and additional spatial information may be detectable only in another range, e.g. centimeters. Hence, the second distance may be necessary in order to inspect additional spatial information. It is mentioned that an orientation of the third structured illumination may be the same or may be different as compared to the first structured illumination or the second structured illumination.

According to a further embodiment the second distance is larger than the first distance, and determining spatial information about the solder paste deposit comprises i) determining a warpage of the component carrier based on the third image, and ii) taking into account information about the warpage. This may provide the advantage that the described method may be applied for determining information about warpage without additional time and efforts.

Warpage may be an undesired curvature of the component carrier. Warpage of the component carrier may in particular have a negative impact on the measurement results concerning the quality, in particular the volume, of the solder paste deposit. As a consequence, it may be highly desirable to determine information about warpage during inspecting of a solder paste deposit without significant additional time and effort. According to the embodiment described here, such information about warpage is determined by providing a third structured illumination and obtaining a third image of the solder paste deposit. Furthermore, the angular position of at least some of the plurality of mirrors of the DMD may be controlled in order to change a third orientation into a forth orientation. Then, a forth illumination having the forth orientation may be provided at the solder paste deposit with the second distance in order to obtain a forth image of the solder paste deposit being illuminated with the forth structured illumination. Information about warpage may then be determined in a highly reliable and precise manner based on the third image and the forth image.

According to a further embodiment providing the first structured illumination and/or the second structured illumination at the solder paste deposit comprises controlling the DMD such that an angle between at least one of the at least two projected lines of the first structured illumination and/or the second structured illumination and a predominant direction of the solder paste deposit and/or a solder paste deposit pattern is in a range between 45° to 80°, in particular 65° to 75°. An optimum value may be approximately 67.5°.

This may provide the advantage that the structured illumination is provided with optimal measurement conditions which may be adapted in an efficient and flexible manner.

A typical solder paste deposit may comprise a rectangular shape. Such a rectangle may comprise two predominant directions which correspond to the length and the width of the rectangle, respectively. For example, a first structured illumination may be provided at the solder paste deposit with an angle in a range between 45° to 80°, in particular 65° to 75°, with regard to a first predominant direction, e.g. the length, of the solder paste deposit. Furthermore, a second structured illumination may be provided at the solder paste deposit with an angle in a range between 45° to 80°, in particular 65° to 75°, with regard to a second predominant direction, e.g. the width, of the solder paste deposit.

The term predominant direction may not only refer to an individual solder paste deposit but also to a solder paste deposit pattern. Such a solder paste deposit pattern may comprise at least two solder paste deposits. The solder paste deposit pattern may also comprise a plurality of solder paste deposits. The solder paste deposit pattern may further comprise a plurality of solder paste deposits which may be designated for one specific electronic component to be mounted on said plurality of solder paste deposits. There may be individual solder paste deposit patterns or solder paste deposit sub-patterns. The solder paste deposit patterns and/or solder paste deposit sub-patterns may be designated for an electronic assembly or for an electronic subassembly of a component carrier. The solder paste deposit pattern may for example comprise the shape of a rectangle. In this case, there may also be two predominant direction which equal the length and the width of the solder paste deposit pattern.

In the case that a plurality of electronic assemblies has to be manufactured and each electronic assembly comprises a different predominant direction of solder paste deposit patterns, the described method may be applied to adjust a preferred angle in a flexible, efficient, and reliable manner.

According to a further embodiment obtaining at least one of the images comprises receiving a measurement light generated by scattering illumination light of the provided first structured illumination and/or the provided second structured illumination at the surface of the solder paste deposit by a camera. This may provide the advantage that well established technology may be implemented into the described method for inspecting.

According to a further embodiment the first structured illumination and/or the second structured illumination is provided at the solder paste deposit along a first direction, and the measurement light generated by scattering the illumination light of the provided first structured illumination and/or the provided second structured illumination at the surface of the solder paste deposit is received by the camera in a second direction such that an angle between the first direction and the second direction is in a range between 10° and 40°, in particular 20° and 35°. An optimum value may be approximately 22.5°.

This may provide the advantage that the structured illumination is provided with optimal measurement conditions which may be adapted in an efficient and flexible manner.

The relation between the first direction and the second direction is critical or important for triangulation, a known method for determining the spatial dimensions and the geometry of an object, which method is used here. Basically, triangulation comprises using two optical devices illumination respectively observing the object. One of the optical devices may be a camera, and the other one may be a light projector. The projection centers of the optical devices and a considered point on the object's surface may define a spatial triangle. Within this triangle, the distance between the optical devices is the base b and must be known. By determining the angles between the projection beams of the optical devices and the basis, the intersection point, and thus the three-dimensional coordinate, may be calculated from the triangular relations.

According to a further embodiment the apparatus comprises further at least one color wheel arranged at the DLP projector for providing the first structured illumination and/or the second structured illumination comprising light with a wave length corresponding to at least one of the colors red, green, and blue. This may provide the advantage that the method is more robust and reliable because illumination light may be efficiently adjusted to specific measurement conditions.

A color wheel may comprise the colors red, green, and blue and may be arranged between a light source and the DMD. The color wheel may rotate and as a result, there will be red, green, and blue light sent to the DMD in an alternating manner. At least some of the plurality of mirrors of the DMD may be controlled in order to provide structured illumination comprising light with a wave length corresponding to at least one of the colors red, green, and blue. Dependent on the measurement conditions, different colors and/or different combinations of colors may provide advantageous effects for the measurement performance. There may also other methods be used for providing different colors than a color wheel.

According to a further embodiment the apparatus further comprises a further DLP projector comprising a further DMD which comprises a further plurality of tiltable mirrors, wherein the further DLP projector is configured for i) providing a further first structured illumination having a further first orientation at the solder paste deposit, and for ii) providing a further second structured illumination having a further second orientation at the solder paste deposit. The further DLP further comprises a further control unit for controlling at least some further mirrors of the further plurality of mirrors of the further DMD in order to change the further first orientation into the further second orientation. Furthermore, the camera is further for i) obtaining a further first image of the solder paste deposit being illuminated with the further first structured illumination, and for ii) obtaining a further second image of the solder paste deposit being illuminated with the further second structured illumination. Hereby, the determination unit is further configured for determining further spatial information about the solder paste deposit based on the further first image and the further second image. This may provide the advantage that the method may be more robust and reliable, because shadows or other disturbing effects may be compensated by illuminating the solder paste deposit from different directions, where a shadowed region is e.g. illuminated with illumination in a first direction and with illumination in a further first direction.

The DLP projector and the further DLP projector may be arranged at the same height, when viewing a direction parallel to the surface of the component carrier (i.e. perpendicular to the normal vector of the surface of the component carrier). The DLP projector and the further DLP projector may as well be arranged at different heights. The DLP projector, the further DLP projector and the solder paste deposit to be inspected may be arranged at the corners of a virtual triangle. There may also a plurality of further DLP projectors be arranged at the same height or at different heights.

According to a further embodiment of the invention the method comprises controlling each mirror of the plurality of mirrors independently, and/or controlling groups of mirrors of the plurality of mirrors independently. This may provide the advantage that the described DMD may be applied in a flexible and reliable manner.

According to a further embodiment the DMD may be configured as a CMOS (complementary metal-oxide-semiconductor) chip comprising an array of mirrors. The size of each mirror of the DMD chip may be in a range between 5 µm and 20 µm. This may provide the advantage that well established chip technology may be implemented into the manufacturing process of an electronic assembly.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: illustrates an apparatus for inspecting a solder paste deposit.
- Figure 2: illustrates a digital mirror device used for the apparatus of Figure 1.
- Figure 3: illustrates an apparatus comprising a further DLP projector.
- Figures 4a: and 4b illustrate structured illumination at solder paste deposits printed on a component carrier.
- Figures 5a: and 5b illustrate structured illumination at solder paste deposits.
- Figures 6a: and 6b illustrate further structured illumination at solder paste deposits.
- Figure 7: illustrates a prior art solder paste inspection apparatus.

### Detailed Description

In different drawings, similar or identical elements are provided with the same reference signs.

Before, referring to the drawings, exemplary embodiments will be described in further detail and some basic considerations will be summarized based on which exemplary embodiments of the invention have been developed.

According to an exemplary embodiment, a DLP projector is used for providing a flexible Moire pattern. The width of lines of the Moire pattern can be easily changed because mirrors of a DMD chip of the DLP projector can be addressed independently. From this pattern, multiple Moire pictures can be built up. The fringe period for accurate solder paste deposit measurements is very fine, whereas the fringe period for warpage measurements is coarse. The reason for this difference is related to the requirements for accurate height measurement performance. The measurement range required for inspecting solder paste deposits is the order of nanometers or micrometers and the measurement range required for warpage measurements is much larger. Therefore, fringes are very different for measuring solder paste deposit and warpage. Furthermore, the DLP projector fringe pattern can be manipulated into any rotational position. As a result, there is no requirement to physically change optics, such as lenses, when there is a need to increase the height measurement range.

According to a further exemplary embodiment, a color wheel arranged at the DLP projector replaces white light by a mixture of RGB colors. Software analyses of RGB light onto a bare board can provide information about the optimum color performance. The percentages of red, green, and blue light can be freely chosen. A software can also automatically choose RGB values for a user. Using colors in a three-dimensional Moire pattern provides increased measurement capabilities. A further advantage is that specular noise is reduced. Specular noise is created when illumination light shines upon an object. This creates reflections which a measurement algorithms cannot handle, because camera light is saturated at the point where reflection occurs. Using the color wheel physically reduces the incidents of specular reflection and thus reduces the occurrence of light saturation. Different colors of boards have different scattering and absorption properties for illumination light with a certain wavelength. Therefore using the color wheel can modify the wavelength of the illumination light and, as a consequence, one can improve the inspection performance by optimizing the color used for inspection.

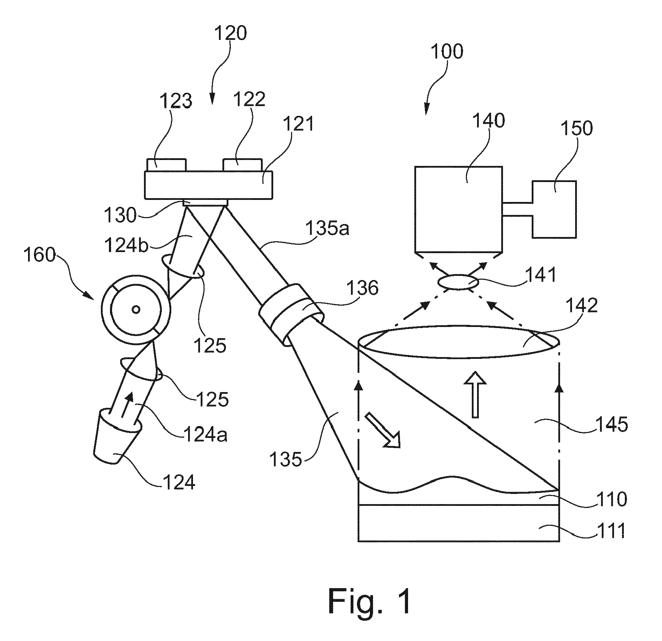

Figure 1 shows an apparatus 100 for inspecting a solder paste deposit 110 being printed on a component carrier 111. The apparatus 100 comprises a digital light processing (DLP) projector 120 comprising a digital mirror device (DMD) 130 which comprises a plurality of tiltable mirrors. The DLP projector 120 further comprises a DLP board 121 to which the DMD 130 is attached and a memory and/or a data input 123. The DLP projector 120 further comprises a light source 124 which emits a light 124a beam via lenses 125 to the DMD 130. The DLP projector 120 is configured for providing a first structured illumination 135 having a first orientation at the solder paste deposit 110, and for providing a second structured illumination 135 having a second orientation at the solder paste deposit 110. Between the lenses 125, a color wheel 160 is arranged for providing the first structured illumination and/or the second structured illumination comprising light with a wave length corresponding to at least one of the colors red, green, and blue. The DMD 130 provides an illumination light 135a to a projection lens 136 in order to provide the first structured illumination 135 and/or the second structured illumination 135. The DLP projector further comprises a control unit 122 for controlling at least some of the mirrors of the plurality of mirrors of the DMD 130 in order to change the first orientation into the second orientation.

The apparatus 100 comprises a camera 140 for obtaining a first image of the solder paste deposit 110 being illuminated with the first structured illumination 135, and for obtaining a second image of the solder paste deposit 110 being illuminated with the second structured illumination. The camera 140 receives a measurement light 145 generated by scattering illumination light 135 of the provided first structured illumination 135 and/or the provided second structured illumination 135 at a surface of the solder paste deposit 110. Hereby, the camera comprises camera lenses 141, 142 for guiding the measurement light 145.

The apparatus 100 further comprises a determination unit 150 for determining spatial information about the solder paste deposit 110 based on the first image and the second image.

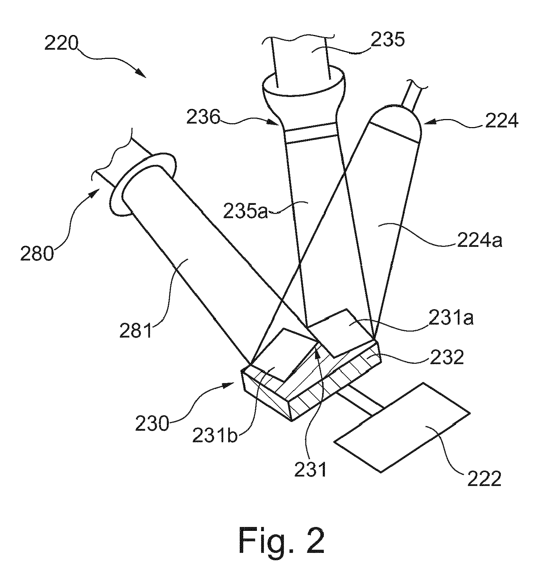

Figure 2 shows a DLP projector 220 comprising a DMD 230. The DMD 230 comprises a plurality of mirrors 231 arranged on a DMD board 222. The mirrors 231 are individually rotated to an on-state 231a or an off-state 231b. In a first place, light 224a from a light source 224 is provided to the mirrors 231a, 231b of the DMD 230. In the on-state 231a, the light 224a is directed 235a to an on-state projector 236 to thereby provide structured illumination 235. In the off-state 231b, the light 224a is directed 281 to an off-state projector 280 to thereby not providing structured illumination.

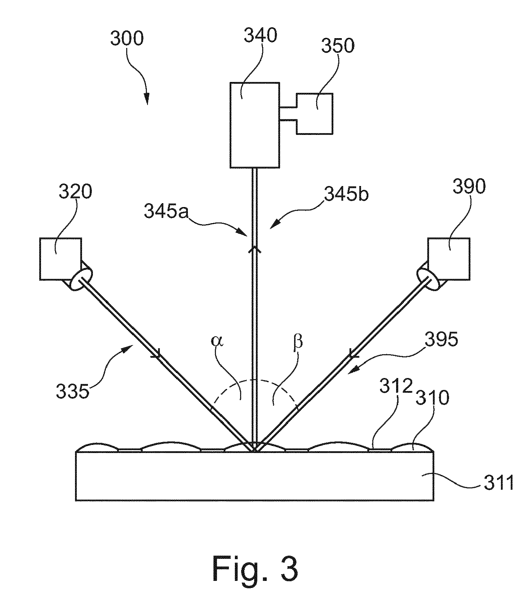

Figure 3 shows an apparatus 300 comprising a DLP projector 320 as described above and a further DLP projector 390. The DLP projector 320 and the further DLP projector 390 are arranged at the same height, when viewing a direction being perpendicular to the force of gravity. The DLP projector 320 provides a first structured illumination 335 and/or a second structured illumination 335 at a solder paste deposit 310 being printed on a component carrier 311. The further DLP projector 390 provides a further first structured illumination 395 and/or a further second structured illumination 395 at the solder paste deposit 310. The structured illumination 335 and the further structured illumination 395 are scattered at the solder paste deposit 310 and the resulting measurement light 345a, 345b is collected by a camera 340. Hereby, the DLP projector 320, the further DLP projector 390, and the solder paste deposit 310 to be inspected are arranged at the corners of a virtual triangle. The camera 340 is further configured for obtaining a further first image of the solder paste deposit 310 being illuminated with the further first structured illumination 395, and for obtaining a further second image of the solder paste deposit 310 being illuminated with the further second structured illumination 395.

The first structured illumination 335 and/or the second structured illumination 335 are provided at the solder paste deposit 310 along a first direction, and the measurement light 345 generated by scattering the illumination light of the provided first structured illumination 335 and/or the provided second structured illumination 335 at the surface of the solder paste deposit 310 is received by the camera 340 in a second direction such that an angle α between the first direction and the second direction is in a range between 20° and 40°.

The further first structured illumination 395 and/or the further second structured illumination 395 are provided at the solder paste deposit 310 along a third direction, and the measurement light 345 generated by scattering the illumination light of the provided further first structured illumination 395 and/or the provided further second structured illumination 395 at the surface of the solder paste deposit 310 is received by the camera 340 in a forth direction such that an angle β between the third direction and the forth direction is also in a range between 20° and 40°.

The solder past deposits 310 cast shadow regions 312 on the surface of the component carrier 311, thereby influencing the structured illumination. Because the DLP projector 320 and the further DLP projector 390 are arranged opposite to each other in a direction being perpendicular to the force of gravity, a shadow region 312 being associated with the illumination of the first DLP projector 320 will be illuminated by the further DLP projector 390. Thus, by performing proper calculations on two images further spatial information about the solder paste deposit 310 are determined.

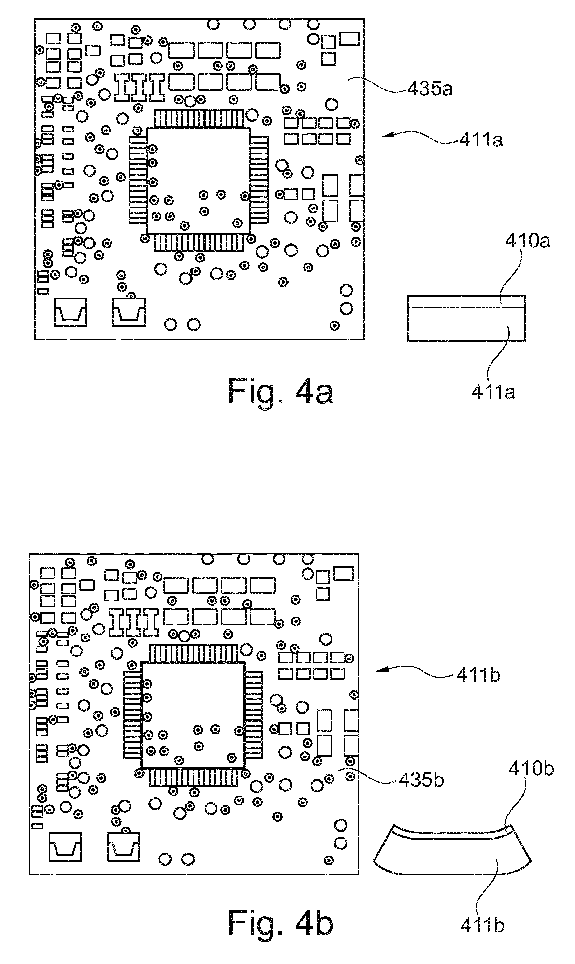

Figure 4a illustrates that a plurality of parallel lines is projected by means of a DMD 130 on the solder paste deposit 410a being printed on the component carrier 411a. The DMD 130 is controlled such that a first distance between the lines is given for providing the first structured illumination 435a and/or the second structured illumination 435a. This distance is in the micrometer range in order to inspect the solder paste deposits 410a.

Figure 4b illustrates that a plurality of parallel lines is projected by means of a DMD 130 on the surface of a component carrier 411b comprising solder paste deposits 410b. The DMD is controlled such that a second distance being different from the first distance between the lines is given for providing a third structured illumination 435b and for obtaining a third image of the solder paste deposit 410b being illuminated with the third structured illumination 435b.

Hereby, the second distance is in a range of centimeters, thus, being larger than the first distance. The component carrier 411b shows warpage and the solder paste deposits 410b are also affected by this warpage. As a consequence, determining spatial information is further supported by information about warpage based on the third image.

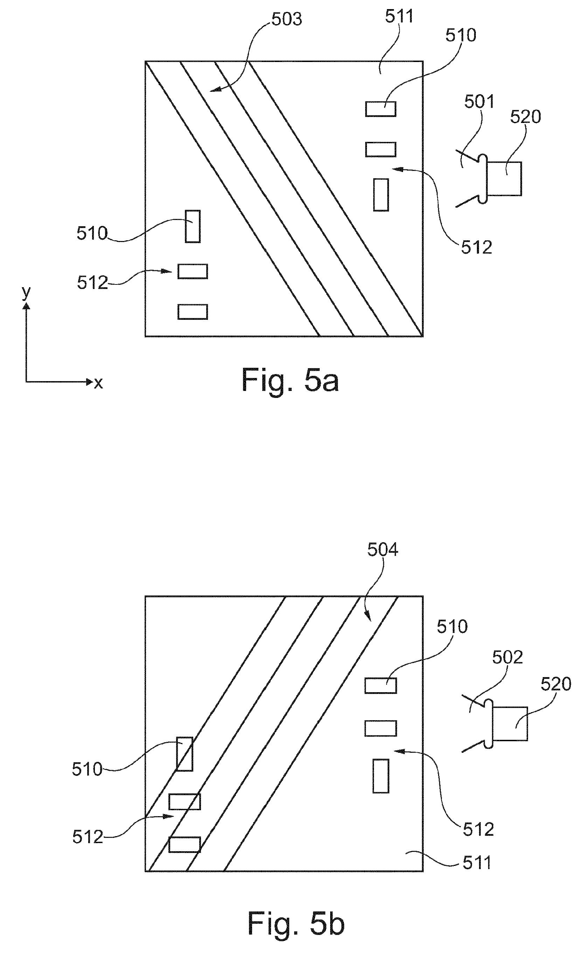

Figure 5a illustrates projected parallel lines 503 of a first structured illumination 501 provided at solder paste deposits 510 which belong to a solder paste deposit pattern 512 being printed on a component carrier 511. The first structured illumination 501 is provided by a DLP projector 520.

Figure 5b illustrates projected parallel lines 504 of a second structured illumination 502 provided at the solder paste deposits 510 which belong to a solder paste deposit pattern 512 being printed on the component carrier 511. The second structured illumination 502 is also provided by the DLP projector 520.

Hereby, a DMD 130 of the DLP projector 520 is controlled such that an angle between one projected line 503 of the first structured illumination 501 or one projected line 504 of the second structured illumination 502, and a predominant direction of a solder paste deposit 510 or a solder paste deposit pattern 512 is approximately 75°. The predominant direction of the solder paste deposit 510 or solder paste deposit pattern 512 is either horizontal (parallel to the indicated x-axis) or vertical (parallel to the indicated y-axis).

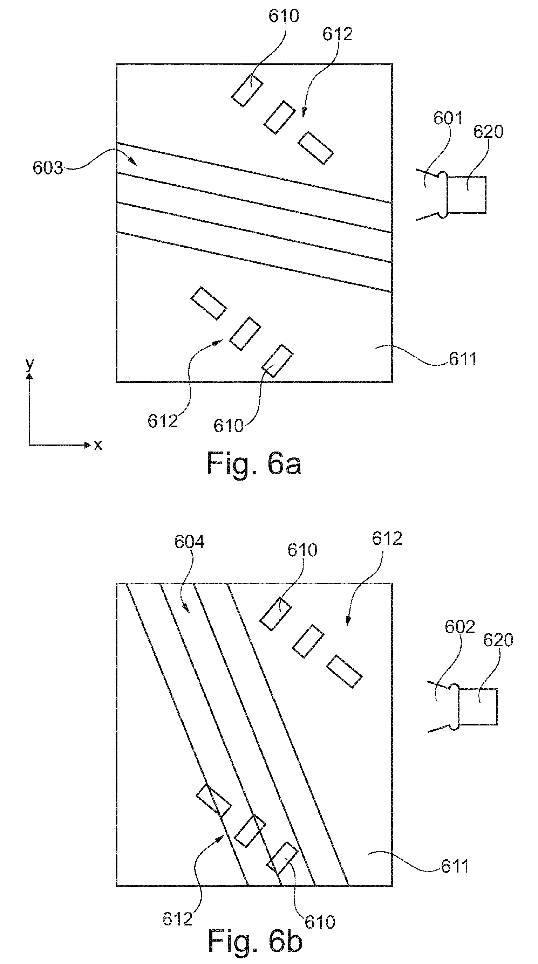

Figure 6a illustrates projected parallel lines 603 of a first structured illumination 601 provided at solder paste deposits 610 which belong to a solder paste deposit pattern 612 being printed on a component carrier 611 in a rotated manner. The first structured illumination 601 is provided by a DLP projector 620.

Figure 6b illustrates projected parallel lines 604 of a second structured illumination 602 provided at the solder paste deposits 610 which belong to a solder paste deposit pattern 612 being printed on the component carrier 611 in a rotated manner. The second structured illumination 602 is also provided by a DLP projector 620.

Hereby, a DMD of the DLP projector 620 is controlled such that an angle between one projected line 603 of the first structured illumination 601 or one projected line 604 of the second structured illumination 602, and a predominant direction of a solder paste deposit 610 or a solder paste deposit pattern 612 is approximately 75°. The predominant direction of the solder paste deposit 610 or solder paste deposit pattern 612 is rotated with respect to the indicated x-axis and/or the indicated y-axis.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

### List of reference signs:

- 100, 300: Apparatus
- 110, 310, 510, 610: Solder paste deposit
- 111, 311, 511, 611: Component carrier
- 120, 220, 320, 520, 620: DLP projector
- 121: DLP board
- 122, 222: Control unit
- 123: Memory/data input
- 124, 224: Light source
- 124a,b, 224a: Light from light source
- 125: Digital light processing (DLP) lenses
- 130, 230: Digital mirror device (DMD)
- 135, 235, 335: Structured illumination light
- 135a, 235a: Illumination light from DMD
- 136, 236: DLP projection lens/on-state projector
- 140, 340: Camera
- 141, 142: Camera lenses
- 145, 345a,b: Measurement light
- 150, 350: Determination unit
- 160: Color wheel
- 231,a,b: DMD mirror
- 232: DMD board
- 280: Off-state projector
- 281: Scattered beam to off-state
- 312: Shadow region of solder paste deposit
- 390: Further DLP projector
- 395: Further structured illumination light
- 411a: Component carrier without warpage
- 410a: Solder paste deposit without warpage
- 411b: Component carrier with warpage
- 410b: Solder paste deposit with warpage
- 435a: First/second structured illumination
- 435b: Third/forth structured illumination
- 501, 601: First structured illumination
- 502, 602: Second structured illumination
- 503, 603: Projected lines of first structured illumination
- 504, 604: Projected lines of second structured illumination
- 512, 612: Solder paste deposit pattern
- 700: Prior art apparatus
- 710: Prior art solder paste deposit
- 711: Prior art component carrier
- 724: Prior art light source
- 730: Prior art fixed lenses
- 735: Prior art illumination light
- 740: Prior art camera
- 745: Prior art measurement light

## Claims

1. A method for inspecting a solder paste deposit (110) being printed on a component carrier (111), the method comprising:
providing a first structured illumination (135) having a first orientation at the solder paste deposit (110) by using a digital mirror device, DMD, (130) which comprises a plurality of tiltable mirrors (231);
obtaining a first image of the solder paste deposit (110) being illuminated with the first structured illumination (135);
controlling the angular position of at least some of the mirrors of the plurality of mirrors (231) of the DMD (130) in order to change the first orientation into a second orientation;
providing a second structured illumination (135) having the second orientation at the solder paste deposit (110) by using the DMD (130);
obtaining a second image of the solder paste deposit (110) being illuminated with the second structured illumination (135);
determining spatial information about the solder paste deposit (110) based on the first image and the second image.

2. The method as set forth in claim 1, wherein determining spatial information comprises
calculating a three-dimensional image of the solder paste deposit (110).

3. The method as set forth in claim 2, wherein calculating the three-dimensional structure further comprises
deriving a volume of the solder paste deposit (110).

4. The method as set forth in any preceding claim, wherein providing the first structured illumination (135) and the second structured illumination (135) comprises
controlling the DMD (130) to project at least two lines at the solder paste deposit (110).

5. The method as set forth in claim 4, wherein the DMD (130) is controlled such that a first distance between the lines is given for providing the first structured illumination (135) and/or the second structured illumination (135).

6. The method as set forth in claims 5, further comprising
controlling the DMD (130) such that a second distance being different from the first distance between the lines is given for providing a third structured illumination (435b);
providing the third structured illumination; and
obtaining a third image of the solder paste deposit (110) being illuminated with the third structured illumination.

7. The method as set forth in claim 6, wherein the second distance is larger than the first distance, and determining spatial information about the solder paste deposit (110) comprises
determining a warpage of the component carrier (111) based on the third image; and
taking into account information about the warpage.

8. The method as set forth in claims 4 to 7, wherein providing the first structured illumination (135) and/or the second structured illumination (135) at the solder paste deposit (110) comprises
controlling the DMD (130) such that an angle between at least one of the at least two projected lines of the first structured illumination (135) and/or the second structured illumination (135) and a predominant direction of the solder paste deposit (110) and/or a solder paste deposit pattern (512, 612)
is in a range between 45° to 80°, in particular 65° to 75°.

9. The method as set forth in any preceding claim, wherein the first structured illumination (135) and/or the second structured illumination (135) comprises light with a wave length corresponding to at least one of the colors red, green, and blue.

10. The method as set forth in any preceding claim, wherein obtaining at least one of the images comprises
receiving a measurement light (145) generated by scattering illumination light of the provided first structured illumination (135) and/or the provided second structured illumination (135) at the surface of the solder paste deposit (110) by a camera (140).

11. The method as set forth in claim 10, wherein
the first structured illumination (135) and/or the second structured illumination (135) is provided at the solder paste deposit (110) along a first direction, and
the measurement light (145) generated by scattering the illumination light of the provided first structured illumination (135) and/or the provided second structured illumination (135) at the surface of the solder paste deposit (110) is received by the camera (140) in a second direction
such that an angle (α) between the first direction and the second direction is in a range between 20° and 40°, in particular 25° and 35°.

12. An apparatus (100) for inspecting a solder paste deposit (110) being printed on a component carrier (111), the apparatus (100) comprising:
a digital light processing, DLP, projector (120) comprising
a digital mirror device, DMD, (130) which comprises a plurality of tiltable mirrors (231),
wherein the DLP projector (120) is configured for
providing a first structured illumination (135) having a first orientation at the solder paste deposit (110), and for
providing a second structured illumination (135) having a second orientation at the solder paste deposit (110);
a control unit (122) for controlling at least some of the mirrors (231) of the plurality of mirrors of the DMD (130) in order to change the first orientation into the second orientation;
a camera (140) for obtaining a first image of the solder paste deposit (110) being illuminated with the first structured illumination (135), and for obtaining a second image of the solder paste deposit (110) being illuminated with the second structured illumination (135); and
a determination unit (150) for determining spatial information about the solder paste deposit (110) based on the first image and the second image.

13. The apparatus (100) as set forth in claim 12, further comprising:
at least one color wheel (160) arranged at the DLP projector (120) for providing the first structured illumination (135) and/or the second structured illumination (135) comprising light with a wave length corresponding to at least one of the colors red, green, and blue.

14. The apparatus (300) as set forth in claim 12 or 13, comprising
a further DLP projector (390) comprising
a further DMD which comprises a further plurality of tiltable mirrors,
wherein the further DLP projector (390) is configured for
providing a further first structured illumination (395) having a further first orientation at the solder paste deposit (310), and for
providing a further second structured illumination (395) having a further second orientation at the solder paste deposit (310);
a further control unit for controlling at least some further mirrors of the further plurality of mirrors of the further DMD in order to change the further first orientation into the further second orientation;
wherein the camera (340) is further configured for
obtaining a further first image of the solder paste deposit (310) being illuminated with the further first structured illumination (395), and for obtaining a further second image of the solder paste deposit (310) being illuminated with the further second structured illumination (395); and wherein the determination unit (350) is further for determining further spatial information about the solder paste deposit (310) based on the further first image and the further second image.

15. A method for manufacturing an electronic assembly which comprises a high-quality solder paste deposit (110), the method comprising
generating a solder paste deposit (110) by printing a solder paste on a component carrier (111);
inspecting the solder paste deposits (110) by carrying out the method according to any one of the claims 1 to 11;
providing the inspected component carrier (111) to an assembly process, wherein electronic components are placed onto the solder paste deposits only in case that the step of inspecting yields that the solder paste deposit (110) is of high quality.
